(19) **Europäisches Patentamt**

**European Patent Office**

**Office européen des brevets**

(11) **EP 0 688 698 B1**

(12) **EUROPÄISCHE PATENTSCHRIFT**

(45) Veröffentlichungstag und Bekanntmachung des Hinweises auf die Patenterteilung:
**19.09.2001   Patentblatt 2001/38**

(51) Int Cl.$^7$: **B60R 16/02**

(21) Anmeldenummer: **95108114.0**

(22) Anmeldetag: **27.05.1995**

(54) **Bordnetz für ein Kraftfahrzeug**

Vehicle network

Réseau de bord d'un véhicule

(84) Benannte Vertragsstaaten:
**DE FR GB IT**

(30) Priorität: **24.06.1994   DE 4422231**

(43) Veröffentlichungstag der Anmeldung:
**27.12.1995   Patentblatt 1995/52**

(73) Patentinhaber:
• **Bayerische Motoren Werke Aktiengesellschaft**
**80788 München (DE)**
• **AUDI AG**
**85045 Ingolstadt (DE)**
• **DaimlerChrysler AG**
**70567 Stuttgart (DE)**
• **Volkswagen Aktiengesellschaft**
**38436 Wolfsburg (DE)**

(72) Erfinder:
• **Mertl, Rainer, (BMW AG)**
**D-85748 Garching (DE)**
• **Maute, Kurt, (Mercedes-Benz AG)**
**D-71067 Sindelfingen (DE)**
• **Otto, Erhard, (BMW AG)**
**D-82194 Gröbenzell (DE)**
• **Streit, Walter, (Audi AG)**
**D-85049 Ingolstadt (DE)**
• **Katzenellenbogen, Dirk, (VW AG)**
**D-38446 Wolfsburg (DE)**
• **Zag, Wolfgang, Dr., (Porsche AG)**
**D-71287 Weissach-Flacht (DE)**

(56) Entgegenhaltungen:
**DE-A- 4 028 242        DE-C- 4 138 943**
**GB-A- 2 255 243**

EP 0 688 698 B1

**Beschreibung**

Die Erfindung betrifft ein Bordnetz für ein Kraftfahrzeug mit einem Primärsystem, das einen spannungsgeregelten Generator, einen primären Energiespeicher sowie mindestens einen primären Energieverbraucher enthält, und mit einem parallelgeschalteten Sekundärsystem, das einen sekundären Energiespeicher sowie mindestens einen sekundären Energieverbraucher enthält.

Aus der DE-C-38 41 769 oder aus der gattungsgemäßen DE-A-4028 242 ist ein derartiges Bordnetz bekannt. Bei diesem bekannten Bordnetz sind der primäre Energiespeicher, nämlich hier die Starterbatterie, und der sekundäre Energiespeicher, nämlich hier die Bordnetzbatterie, miteinander verbunden, sobald der Generator arbeitet. Dies hat bei geringer Generatorstromzufuhr den Nachteil, daß die Bordnetzbatterie durch Ladungsausgleich auf Kosten der Starterbatterie geladen wird, wenn der Ladezustand der Bordnetzbatterie schlechter als der der Starterbatterie ist.

Bei dem bekannten Bordnetz ist auch zwischen der Bordnetzbatterie und den Bordnetzverbrauchern (sekundären Energieverbrauchern) und dem übrigen Teil des Bordnetzes ein Schalter angebracht, der bei Generatorstillstand geöffnet wird, sobald die Starterbatteriespannung unter einen zulässigen Grenzwert sinkt. Diese Maßnahme schützt die Starterbatterie (primärer Energiespeicher) nur bei Generatorstillstand vor einer vollständigen Entladung und läßt somit eine Teilentladung der Starterbatterie zu. Bei Fahrtbeginn nimmt die Belastung der Starterbatterie zu, wenn ein Ladungsausgleich der beiden Batterien zuungunsten der Starterbatterie stattfindet. Dies kann im Extremfall zur vollständigen Entladung oder Zerstörung des primären Energiespeichers, nämlich hier der Starterbatterie, führen.

Es ist daher Aufgabe der Erfindung, stets einen optimalen Ladezustand des primären Energiespeichers sicherzustellen.

Diese Aufgabe wird erfindungsgemäß dadurch gelöst, daß das Sekundärsystem eine Reglereinheit mit einem an den Generator angeschlossenen regelbaren Widerstand umfaßt, die den Ladezustand des sekundären Energiespeichers überwacht und die in Abhängigkeit vom aktuellen Ladezustand des sekundären Energiespeichers sowohl den regelbaren Widerstand derart ansteuert als auch den bzw. die sekundären Energieverbraucher derart zu- bzw. abschaltet, daß einerseits beim Laden des sekundären Energiespeichers das Primärsystem nicht überlastet und andererseits beim Entladen des sekundären Energiesystems ein vorgegebener Restladungswert nicht unterschritten wird.

Da das den Generator enthaltende Primärsystem abhängig von der elektrischen Last des Bordnetzes, d. h. konkret der primären Energieverbraucher und dem Betriebszustand der den Generator antreibenden Brennkraftmaschine nicht zu allen Zeiten ausreichend elektrische Energie zur Verfügung stellen kann, bietet das erfindungsgemäße Bordnetz die Möglichkeit, den Ladestrom zum sekundären Energiespeicher und damit die Belastung des Primärsystems im bestimmten Umfang zu regeln. Durch den den Ladestrom zum sekundären Energiespeicher beeinflussenden regelbaren Widerstand wird ferner das Primärsystem bedämpft, wodurch die Bordnetzoberwelligkeit reduziert wird. Voraussetzung dafür ist jedoch, daß der sekundäre Energiespeicher ausreichend Strom aufnehmen kann, d. h. daß der sekundäre Energiespeicher nicht bereits vollständig geladen ist.

Gemäß einer bevorzugten Ausführungsform der Erfindung ist der primäre Energiespeicher relativ zum sekundären Energiespeicher räumlich näher beim Generator angeordnet. Dies hat zur Folge, daß der elektrische Leitungswiderstand zwischen dem Generator und dem primären Energiespeicher kleiner ist als der elektrische Leitungswiderstand zwischen dem Generator und dem sekundären Energiespeicher. Damit ist beim Laden der beiden Energiespeicher der Spannungsabfall auf der Zuleitung zum primären Energiespeicher kleiner als der Spannungsabfall auf der Zuleitung zum sekundären Energiespeicher. Dies führt dazu, daß der primäre Energiespeicher stets vorrangig geladen wird und damit stets einen optimalen Ladezustand aufweist.

Wenn beispielsweise der Anlasser der Kraftfahrzeug-Brennkraftmaschine einer der primären Energieverbraucher des erfindungsgemäßen Bordnetzes ist, dann ist bei einem stets optimalen Ladezustand des primären Energiespeichers eine maximale Startfähigkeit und damit Verfügbarkeit des Kraftfahrzeuges gewährleistet.

Bei einer vorteilhaften Weiterbildung der Erfindung wird der aktuelle Ladezustand des sekundären Energiespeichers ausgehend von einem vorgegebenen bzw. vorgebbaren Ausgangsladezustand durch Addition der beim Ladevorgang zugeführten Ladungsmenge sowie durch Subtraktion der beim Entladevorgang entnommenen Ladungsmenge unter Berücksichtigung des Wirkungsgrades des sekundären Energiespeichers bestimmt.

Die dem sekundären Energiespeicher zugeführte Ladungsmenge wird dabei durch zeitliche Integration des Ladestromes bestimmt.

Analog dazu wird die dem sekundären Energiespeicher entnommene Ladungsmenge durch zeitliche Integration der auf den bzw. auf die Summe der Lastwiderstände bezogene Entladespannung bestimmt.

Bei Inbetriebnahme des Bordnetzes wird die im sekundären Energiespeicher enthaltene elektrische Ladung, d. h. der Ladezustand des sekundären Energiespeichers auf einen Ausgangswert festgelegt. Dieser läßt sich am einfachsten aus der Ruhespannung und der Temperatur des sekundären Energiespeichers näherungsweise bestimmen. Dies geschieht vorteilhaft dadurch, daß während des Startvorganges des Kraftfahrzeuges, bei dem der sekundäre Energiespeicher bevorzugt weder mit seiner Last noch mit dem Primärsystem verbunden ist, die Spannung des sekundären Energiespeichers sowie dessen Temperatur gemessen wird. Während des Betriebes des erfindungsgemäßen Bordnetzes wird dann der Ladezustand des sekundären Energiespeichers gemäß der zugeführten bzw. entnommenen Ladungsmenge korrigiert, wobei bei der entnommenen Ladungsmenge der Wirkungsgrad des sekundären Energiespeichers durch einen Faktor k berücksichtigt werden muß.

Nach einer weiteren vorteilhaften Ausgestaltung der Erfindung wird der Ladestrom durch den regelbaren Widerstand der Reglereinheit des Sekundärsystems auf einen maximal zulässigen Stromstärkewert begrenzt. Damit wird eine übermäßige Belastung des Primärsystems vermieden.

Gemäß einer weiteren Weiterbildung des erfindungsgemäßen Bordnetzes wird die Steilheit des Anstiegs bzw. des Abfalls des Ladestroms des sekundären Energiespeichers durch den regelbaren Widerstand der Reglereinheit auf einen maximal zulässigen Wert begrenzt. Es werden dadurch die störenden elektromagnetischen Abstrahlungen auf ein Minimum verringert.

Der den Ladestrom des sekundären Energiespeichers bestimmende regelbare Widerstand der Reglereinheit ist vorteilhaft durch mehrere hintereinanderbzw. parallelgeschaltete Feldeffekttransistoren gebildet.

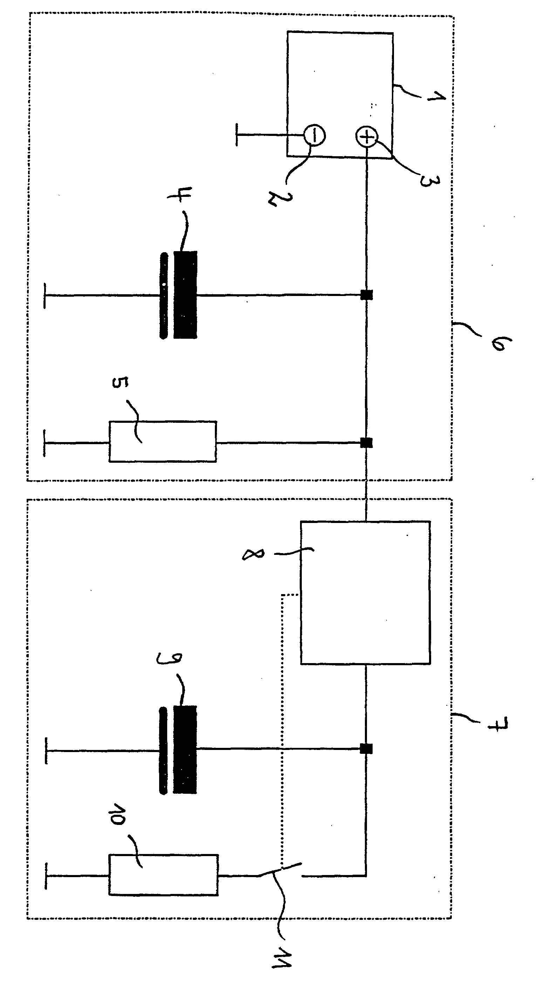

Im folgenden wird ein Ausführungsbeispiel des erfindungsgemäßen Bordnetzes anhand der einzigen Figur näher erläutert.

Bei dem in der Figur dargestellten Bordnetz für ein Kraftfahrzeug ist ein spannungsgeregelter Generator 1, beispielsweise ein Gleichstromgenerator oder ein mit einem Gleichrichter versehener Wechselstromgenerator, mit seinem einen Anschluß 2 an Erdpotential und mit seinem anderen Anschluß 3 sowohl mit dem primären Energiespeicher 4 und den als ein Lastwiderstand 5 dargestellten primären Energieverbrauchern des Primärsystems 6 als auch mit dem Sekundärsystem 7 verbunden.

Das zum Primärsystem 6 elektrisch parallel geschaltete Sekundärsystem 7 enthält eine Reglereinheit 8 mit einem regelbaren Widerstand, beispielsweise in Form von hintereinander- bzw. parallelgeschalteten Feldeffekttransistoren, über den der Generator 1 mit dem sekundären Energiespeicher 9 sowie mit mindestens einem sekundären Energieverbraucher 10 verbunden ist. Der bzw. einer der sekundären Energieverbraucher 10 kann beispielsweise die elektrische Heizeinrichtung eines Abgaskatalysators einer Kraftfahrzeug-Brennkraftmaschine sein. Zwischen dem bzw. den sekundären Energieverbrauchern 10 und dem regelbaren Widerstand der Reglereinheit 8 ist ein von dieser steuerbarer elektrischer Schalter 11 vorgesehen, der den bzw. die sekundären Energieverbraucher 10 derart zu- bzw. abschaltet, daß beim Entladen des sekundären Energiespeichers 9 ein vorgegebener erwünschter Restladungswert nicht unterschritten wird.

Durch die Reglereinheit 8 wird der Ladezustand des sekundären Energiespeichers 9 überwacht und in Abhängigkeit vom jeweils aktuellen Ladezustand des sekundären Energiespeichers neben der oben beschriebenen Zu- und Abschaltung des bzw. der sekundären Energieverbraucher 10 auch der in der Reglereinheit 8 enthaltene regelbare Widerstand derart angesteuert, daß beim Laden des sekundären Energiespeichers 9 das Primärsystem 6 nicht überlastet wird. Dies ist insbesondere dann erforderlich, wenn das den Generator 1 enthaltene Primärsystem 6 abhängig von der elektrischen Last 5 des Bordnetzes und dem Betriebszustand der den Generator antreibenden Brennkraftmaschine nicht ausreichend Energie zur Verfügung stellen kann. Durch die Regelung des Ladestroms des sekundären Energiespeichers 9 und damit der Regelung der Belastung des Primärsystems 6 besteht die Möglichkeit, das Primärsystem 6 zur deutlichen Reduzierung der Bordnetzoberwelligkeit zu bedämpfen. Voraussetzung dafür ist jedoch, daß der sekundäre Energiespeicher 9 ausreichend elektrischen Strom aufnehmen kann, d. h. der sekundäre Energiespeicher 9 nicht bereits vollständig geladen ist.

Durch den in der Reglereinheit 8 enthaltenen regelbaren Widerstand kann ferner der Ladestrom des sekundären Energiespeichers 9 auf einen maximal zulässigen Stromstärkewert begrenzt werden. Es wird dadurch eine übermäßige Belastung des Primärsystems 6 verhindert.

Darüber hinaus wird durch den regelbaren Widerstand der Reglereinheit 8 die Steilheit des Anstiegs bzw. des Abfalls des Ladestroms des sekundären Energiespeichers 9 auf einen maximal zulässigen Wert begrenzt. Dadurch werden die störenden elektromagnetischen Einflüsse des Sekundärsystemes 7 und damit des gesamten Bordnetzes auf ein Minimum begrenzt.

Wie bereits vorstehend erwähnt, erfolgt sowohl die Regelung des in der Reglereinheit 8 enthaltenen regelbaren Widerstandes als auch die Zu- bzw. Abschaltung des bzw. der sekundären Energieverbraucher 10 und damit die Ansteuerung des elektrischen Schalters 11 in Abhängigkeit vom gerade aktuellen Ladezustand des sekundären Energiespeichers 9. Dabei wird der jeweils aktuelle Ladezustand des sekundären Energiespeichers 9 ausgehend von einem vorgegebenen bzw. vorgebbaren Ausgangsladezustand durch Addition der beim Ladevorgang zugeführten Ladungsmenge $Q_{Lade}$ sowie durch Subtraktion der beim Entladevorgang entnommenen Ladungsmenge $Q_{Entlade}$ unter Berücksichtigung des Wirkungsgradfaktors k des sekundären Energiespeichers 9 bestimmt. Dabei wird die dem sekundären Energiespeicher 9 zugeführte Ladungsmenge $Q_{Lade}$ durch die zeitliche Integration des Ladestromes des sekundären Energiespeichers 9 gemäß der Formel

$$Q_{Lade}(t) = \text{Integral } \{(i(t)\, dt)\}\ (t = t_{ein} \text{ bis } t = t_{aus})$$

bestimmt. Analog dazu wird die aus dem sekundären Energiespeicher 9 entnommene Ladungsmenge $Q_{Entlade}$ durch zeitliche Integration der auf den Lastwiderstand des bzw. der sekundären Energieverbraucher 10 bezogenen Entladespannung gemäß der folgenden Formel bestimmt:

$$Q_{Entlade}(t) = \text{Integral } \{(u(t)/R)\, dt\}\ (t=t_{ein} \text{ bis } t=t_{aus})$$

Der aktuelle Ladezustand des sekundären Energiespeichers 9 kann ausgehend von einem vorgegebenen bzw. gemessenen Ausgangsladezustand unter Berücksichtigung des Wirkungsgradfaktors k des sekundären Energiespeichers 9 durch Bildung der Differenz aus der dem sekundären Energiespeicher 9 zugeführten Ladungsmenge $Q_{Lade}$ und der aus dem sekundären Energiespeicher 9 entnommenen Ladungsmenge $Q_{Entlade}$ gemäß der folgenden Formel bestimmt werden:

$$Q(t) = Q_{Lade}\,(t) - k\, Q_{Entlade}\,(t)$$

mit

k= Faktor zur Berücksichtigung des Wirkungsgrades des sekundären Energiespeichers 9

Bei Inbetriebnahme des Bordnetzes kann der Ausgangswert des Ladezustandes des sekundären Energiespeichers 9 entweder durch eine Säuredichtemessung bestimmt oder aus den Meßgrößen der Ruhespannung und der Temperatur des sekundären Energiespeichers 9 in bekannter Weise näherungsweise berechnet werden.

Zusammenfassend kann festgestellt werden, daß durch das erfindungsgemäße Bordnetz stets ein optimaler Ladezustand des primären Energiespeichers 4 erreicht wird. Darüber hinaus wird beim erfindungsgemäßen Bordnetz weder das Primärsystem 6 überlastet noch der sekundäre Energiespeicher 9 des Sekundärsystems 7 unter einen vorgegebenen Restladungswert entladen. Damit ist eine hohe Lebensdauer sowohl des primären Energiespeichers 4 als auch des sekundären Energiespeichers 9 gewährleistet. Schließlich sind die elektromagnetischen Störungen des erfindungsgemäßen Bordnetzes auf einen Minimalwert reduziert.

## Patentansprüche

1. Bordnetz für ein Kraftfahrzeug mit einem Primärsystem, das einen spannungsgeregelten Generator, einen primären Energiespeicher sowie mindestens einen primären Energieverbraucher enthält, und mit einem parallelgeschalteten Sekundärsystem, das einen sekundären Energiespeicher sowie mindestens einen sekundären Energieverbraucher enthält,
**dadurch gekennzeichnet, daß** das Sekundärsystem (7) eine Reglereinheit (8) mit einem an dem Generator (1) angeschlossenen regelbaren Widerstand umfaßt, die den Ladezustand des sekundären Energiespeichers (9) überwacht und die in Abhängigkeit vom aktuellen Ladezustand des sekundären Energiespeichers (9) sowohl den regelbaren Widerstand derart ansteuert als auch den bzw. die sekundären Energieverbraucher (10) derart zu- bzw. abschaltet, daß einerseits beim Laden des sekundären Energiespeichers (9) das Primärsystem (6) nicht überlastet und andererseits beim Entladen des sekundären Energiespeichers (9) ein vorgegebener Restladungswert nicht unterschritten wird.

2. Bordnetz nach Anspruch 1,
**dadurch gekennzeichnet, daß** der primäre Energiespeicher (4) relativ zum sekundären Energiespeicher (9) durch niederohmigere Leitungen mit dem Generator (1) verbunden ist.

3. Bordnetz nach Anspruch 1 oder 2,
**dadurch gekennzeichnet, daß** der aktuelle Ladezustand des sekundären Energiespeichers (9) ausgehend von einem vorgegebenen bzw. vorgebbaren Ausgangsladezustand durch Addition der beim Ladevorgang zugeführten Ladungsmenge ($Q_{Lade}$) sowie durch Subtraktion der beim Entladevorgang entnommenen Ladungsmenge ($Q_{Entlade}$) unter Berücksichtigung des Wirkungsgradfaktors (k) des sekundären Energiespeichers (9) bestimmt wird.

4. Bordnetz nach Anspruch 3,
**dadurch gekennzeichnet, daß** die dem sekundären Energiespeicher (9) zugeführte Ladungsmenge durch zeitliche Integration des Ladestromes (i(t)) bestimmt wird.

5. Bordnetz nach Anspruch 3 oder 4,
**dadurch gekennzeichnet, daß** die aus dem sekundären Energiespeicher (9) entnommene Ladungsmenge ($Q_{Entlade}$) durch zeitliche Integration der auf den Lastwiderstand des bzw. der sekundären Energieverbraucher (10) bezogenen Entladespannung (u(t)) bestimmt wird.

6. Bordnetz nach einem der vorhergehenden Ansprüche,
**dadurch gekennzeichnet, daß** der Ladestrom (i(t)) des bzw. der sekundären Energieverbraucher (10) durch den regelbaren Widerstand der Reglereinheit (8) auf einen maximal zulässigen Stromstärkewert begrenzt wird.

**7.** Bordnetz nach einem der vorgehenden Ansprüche, **dadurch gekennzeichnet, daß** die Steilheit des Anstiegs bzw. des Abfalls des Ladestroms (i(t)) des sekundären Energiespeichers (9) durch den regelbaren Widerstand der Reglereinheit (8) auf einen maximal zulässigen Wert begrenzt wird.

**8.** Bordnetz nach einem der vorhergehenden Ansprüche,
**dadurch gekennzeichnet, daß** der regelbare Widerstand der Reglereinheit (8) durch mehrere hintereinanderbzw. parallelgeschaltete Feldeffekttransistoren gebildet ist.

**Claims**

**1.** An on-board network for a motor vehicle with a primary system, which includes a voltage regulated generator, a primary energy store and at least one primary energy user, and with a secondary system, connected in parallel, which includes a secondary energy store and at least one secondary energy user,
**characterised in that** the secondary system (7) includes a regulator unit (8) with a variable resistor connected to the generator (1), which monitors the state of charge of the secondary energy store (9) and which, depending on the current state of charge of the secondary energy store (9), both controls the variable resistor and also switches the secondary loads (10) on and off in such a manner that on the one hand during the charging of the secondary energy store (9) the primary system (6) is not overloaded and on the other hand during discharge of the secondary energy store (9) does not fall below a prescribed value of residual charge.

**2.** An on-board network according to Claim 1, **characterised in that** the primary energy store (4) is connected, relative to the secondary energy store (9), to the generator (1) by a low resistance cable.

**3.** An on-board network according to Claim 1 or Claim 2, **characterised in that** the current state of charge of the secondary energy store (9) is determined starting from a prescribed or prescribable starting state of charge taking account of the efficiency factor (k) of the secondary energy store (9) by the amount of charge ($Q_{CHARGE}$) fed into the secondary energy store (9) during the charging process and the amount of charge ($Q_{DISCHARGE}$) extracted from the secondary energy store (9).

**4.** An on-board network according to Claim 3, **characterised in that** the amount of charge fed into the secondary energy store (9) is determined by integration over time of the charging current (I(t)).

**5.** An on-board network according to Claim 3 or Claim 4, **characterised in that** the amount of charge ($Q_{DISCHARGE}$) extracted from the secondary energy store (9) is determined by the integration over time of the discharge voltage (u(t)) referred to the load resistance or the secondary energy user (10).

**6.** An on-board network according to any one of the foregoing Claims,
**characterised in that** the charging current (I(t)) of the secondary energy user(s) (10) is limited to a maximum permitted current value by the controllable resistance of the regulator unit (8).

**7.** An on-board network according to one of the foregoing Claims,
**characterised in that** the steepness of the rise or the fall of the charging current (I(t)) of the secondary energy store (9) is limited by the controllable resistance of the regulator unit (8) to a maximum permitted value.

**8.** An on-board network according to one of the foregoing Claims,
**characterised in that** the controllable resistance of the regulator unit (8) is formed by several field effect transistors connected in series or in parallel.

**Revendications**

**1.** Réseau de bord d'un véhicule automobile, comprenant un système primaire incluant un générateur à tension régulée, un accumulateur primaire d'énergie et au moins un consommateur primaire d'énergie, ainsi qu'un système secondaire monté en parallèle incluant un accumulateur secondaire d'énergie et au moins un consommateur secondaire d'énergie,
**caractérisé en ce que**
le système secondaire (7) comprend une unité de régulation (8) possédant une résistance réglable, raccordée au générateur (1), qui surveille l'état de charge de l'accumulateur secondaire d'énergie (9) et qui à la fois commande la résistance réglable en fonction de l'état de charge actuel de l'accumulateur secondaire (9) et connecte ou coupe le ou les consommateurs secondaires d'énergie (10), de manière que, d'une part le système primaire (6) n'est pas soumis à une charge excessive quand on charge l'accumulateur (9) secondaire (9), et que d'autre part quand on décharge cet accumulateur (9), la charge qu'il conserve ne descend pas en dessous d'une valeur résiduelle donnée à l'avance.

**2.** Réseau de bord selon la revendication 1,
**caractérisé en ce que**
l'accumulateur primaire d'énergie (4), comparativement à l'accumulateur secondaire d'énergie (9), est relié au générateur (1) par des conducteurs de moindre résistance électrique.

**3.** Réseau de bord selon la revendication 1 ou 2, **caractérisé en ce que**
l'état actuel de charge de l'accumulateur secondaire d'énergie (9), partant d'un état initial de charge donné à l'avance ou pouvant être donné à l'avance, est défini en ajoutant la charge ($Q_{Lade}$) fournie pendant le processus de charge et en retranchant la charge ($Q_{Entlade}$) extraite pendant le processus de décharge, avec prise en compte du facteur de rendement (k) de l'accumulateur secondaire d'énergie (9).

**4.** Réseau de bord selon la revendication 3, **caractérisé en ce que**
la charge fournie à l'accumulateur d'énergie (9) est définie par intégration dans le temps de l'intensité du courant de charge (i(t)).

**5.** Réseau de bord selon la revendication 3 ou 4, **caractérisé en ce que**
la charge ($Q_{Entlade}$) extraite de l'accumulateur secondaire d'énergie (9) est définie par intégration dans le temps de la tension de décharge (u(t)) sur la résistance de charge correspondant au ou aux consommateurs secondaires d'énergie (10).

**6.** Réseau de bord selon l'une quelconque des revendications précédentes, **caractérisé en ce que**
l'intensité (i(t)) du courant alimentant le ou les consommateurs secondaires d'énergie (10) est limitée par la résistance réglable de l'unité de régulation (8), à une valeur maximale d'intensité admissible.

**7.** Réseau de bord selon l'une quelconque des revendications précédentes, **caractérisé en ce que**
la pente de la croissance ou de la décroissance de l'intensité du courant de charge (i(t)) de l'accumulateur secondaire d'énergie (9) est limitée par la résistance de l'unité de régulation (8) à une valeur maximale admissible.

**8.** Réseau de bord selon l'une quelconque des revendications précédentes, **caractérisé en ce que**
la résistance réglable de l'unité de régulation (8) est constituée par plusieurs transistors à effet de champ montés en série ou en parallèle.